# EUROPÄISCHE PATENTSCHRIFT

(11) **EP 2 102 024 B1**
(45) Veröffentlichungstag und Bekanntmachung des Hinweises auf die Patenterteilung: **26.10.2011**
(21) Anmeldenummer: 07817398.6
(22) Anmeldetag: 14.11.2007
(51) Int. Cl.: B60J 5/10

(54) **BETÄTIGUNGSSYSTEM FÜR EINE GETEILT AUFKLAPPBARE FAHRZEUGHECKKLAPPE**
ACTIVATING SYSTEM FOR A DIVIDED HINGED VEHICLE TAILGATE
SYSTÈME D'ACTIONNEMENT POUR UN HAYON DE VÉHICULE RABATTABLE DIVISÉ

(30) Priorität: 20.12.2006 CZ 20060811
(43) Veröffentlichungstag der Anmeldung: 23.09.2009
(73) Patentinhaber: Skoda Auto a.s., 293 60 Mladá Boleslav (CZ)
(72) Erfinder: CIMRMAN, Radek, 294 01 Bakov nad Jizerou (CZ); TOPEK, Miroslav, 530 09 Pardubice (CZ)
(86) Internationale Anmeldenummer: PCT/CZ2007/000102
(87) Internationale Veröffentlichungsnummer: WO 2008/074266

(56) Entgegenhaltungen:
- EP-A- 0 159 017
- DE-A1-102006 013 735
- DE-U1- 9 310 058
- FR-A- 2 809 676

## Beschreibung

### Bereich Technik

Die Erfindung betrifft eine Anordnung von Betätigungselementen für eine geteilte aufklappbare Fahrzeugheckklappe, gemäß dem Oberbegriff des Anspruchs 1.

Eine solche Heckklappe ist aus der FR 2 809 676 A bekannt.

### Bestehender Stand der Technik

Aus dem Stand der Technik ist die Ausführung der aufklappbaren Fahrzeugheckklappe bekannt, die in zwei Teile aufgeteilt ist, sodass entweder ganze aufklappbare Fahrzeugheckklappe wie bei Karosserien Typ Liftback oder nur deren Unterteil wie bei Karosserien Typ Sedan geöffnet werden kann.

Es ist eine Reihe von Konstruktionsvarianten solcher zweiteiliger aufklappbarer Fahrzeugheckklappe bekannt. Unter die bekanntesten gehört aufklappbare Fahrzeugheckklappe, die durch Oberteil und Unterteil gebildet ist, wobei die aufklappbare Fahrzeugheckklappe mit oberem Schloss, der zur Verbindung des Oberteiles und des Unterteiles und/oder des Oberteiles zur Karosserie, und unterem Schloss, der zur Verbindung der aufklappbaren Fahrzeugheckklappe und/oder des Unterteiles zur Karosserie dient, versehen ist.

### Das Wesen der Erfindung

Eine Lösung der Betätigung des Öffnens der aufklappbaren Fahrzeugheckklappe bietet der Anspruch 1 der vorgelegten Erfindung.

### Übersicht der Bilder auf der Zeichnung

Die Erfindung wird näher mittels schematischer Zeichnungen erläutert, auf denen die Abb. 1 die aufklappbare Fahrzeugheckklappe in geschlossener Lage darstellt. Auf Abb. 2 ist die aufklappbare Fahrzeugheckklappe mit geöffnetem nur Unterteil und auf Abb. 3 ist die aufklappbare Fahrzeugheckklappe geöffnet als Ganzes. Abb. 4 stellt schematische Ausführung der Betätigungselemente dar. Abb. 5 stellt Ansicht im Schnitt an Betätigungselemente dar, die durch Logo mit Schaltern gebildet werden.

### Beispiele der Ausführung der Erfindung

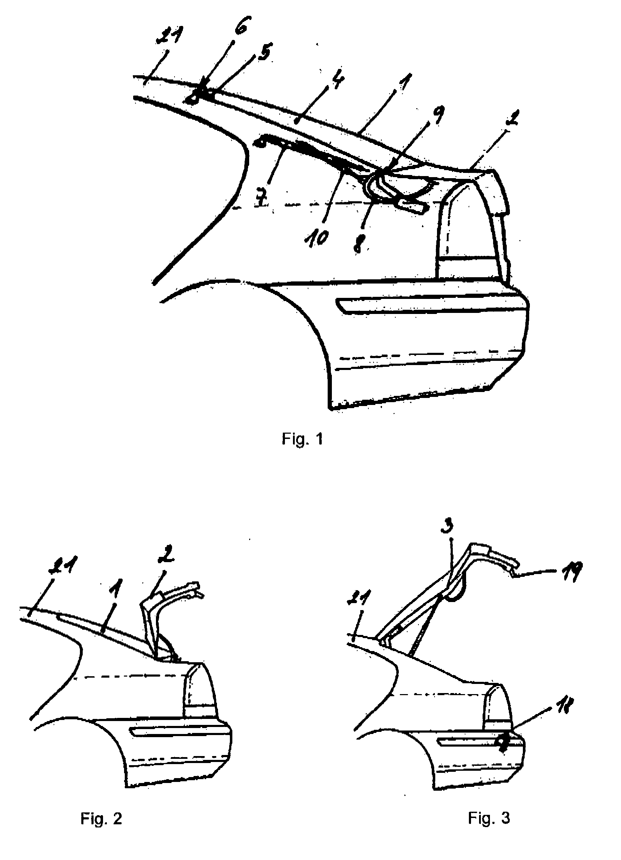

Aufklappbare Fahrzeugheckklappe 3 nach Abb. 1 bis 3 umfasst den Oberteil 1 und Unterteil 2.

Der Unterteil 2 hat am Unterrand den unteren Schloss 19 für Einfangen der Öse 18, die an hinterer Schwelle des Kofferraums der Karosserie 21 angebracht ist. Der Oberteil 1 ist mit Verglasung 4 versehen und mittels des ersten Paars der einachsigen Aufhängungen 5 aufklappbar um die Achse 6 zur Karosserie 21 befestigt wird. Zwischen Karosserie 21 und dem Oberteil 1 ist das erste Gasdruckfederpaar 7 angeordnet. Am unteren Rand des Oberteils 1 wird mittels des zweiten Paars der einachsigen Aufhängungen 8 aufklappbar um die Achse 9 der Unterteil 2 gelagert. Zwischen dem Oberteil 1 und dem Unterteil 2 ist das zweite Gasdruckfederpaar 10 angeordnet.

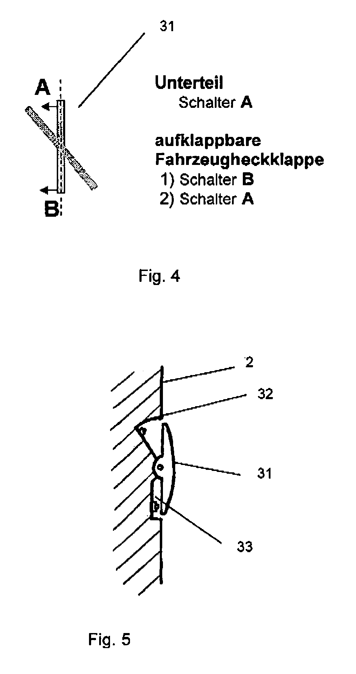

Abb. 4 und 5 darstellen andere günstige Ausführung der Betätigungselemente. Diese wird durch Logo 31 und die Schalter A 32 und B 33 gebildet. Die Fahrzeug-Logos haben meistens runde, ovale und weiter quadratische oder viereckige Form mit abgerundeten Ecken. Logo 31 ist am Unterteil 2 schwenkbar angebracht. Die Schwenkachse ist in günstiger Ausführung horizontal und senkrecht zu Fahrzeuglängsachse situiert.

Wenn der Benutzer des Fahrzeugs nur den Unterteil 2 öffnen möchte, so drückt er nur oberen Teil des Logos 31 und dadurch auch den Drucker A 32. Der Oberteil 1 bleibt in diesem Fall mit der Karosserie 21 fest verbunden. Danach fasst der Benutzer mit der Hand den Handgriff an, der in diesem Fall durch unteren Teil des Logos 31 gebildet ist und kann den Unterteil 2 öffnen.

Wenn der Benutzer des Fahrzeugs ganze aufklappbare Fahrzeugheckklappe 3 öffnen möchte, so drückt er zuerst unteren Teil des Logos 31 und dadurch auch den Schalter B 33. Dadurch kommt zu fester Verbindung des Oberteils 1 und des Unterteils 2 und zu Lösung des Oberteils 1 und der Karosserie 21. Danach fasst der Benutzer mit der Hand den Handgriff, der in diesem Fall durch unteren Teil des Logos 31 gebildet ist und kann die aufklappbare Fahrzeugheckklappe 3 öffnen.

### Bezugszeichenverzeichnis

- 1: Oberteil
- 2: Unterteil
- 3: Aufklappbare Fahrzeugheckklappe
- 4: Verglasung
- 5: Erste einachsige Aufhängung
- 6: Achse der ersten Aufhängung
- 7: Erste Gasdruckfeder
- 8: Zweite einachsige Aufhängung
- 9: Achse der zweiten Aufhängung
- 10: Zweite Gasdruckfeder
- 18: Öse
- 19: Unterer Schloss
- 21: Karosserie
- 30: Drucker
- 31: Logo
- 32: Schalter A
- 33: Schalter B

## Patentansprüche

1. Anordnung von Betätigungselementen für eine geteilte aufklappbare Fahrzeugheckklappe (3), die durch ein Oberteil (1) und ein Unterteil (2) gebildet wird, wobei die aufklappbare Fahrzeugheckklappe (3) mit einem oberen Schloss, das zur Verbindung des Oberteils (1) mit dem Unterteil (2) und/oder des Oberteils (1) mit der Karosserie (21) dient, und mit einem unteren Schloss (19), das zur Verbindung der aufklappbaren Fahrzeugheckklappe (3) und/oder des Unterteils (2) mit der Karosserie (21) dient, versehen ist,
**dadurch gekennzeichnet, dass**
die Anordnung ein Logo (31), das am Unterteil (2) schwenkbar anbringbar ist, sowie zwei Schalter A (32) und B (33), die am Unterteil (2) anbringbar sind, umfasst,
wobei der Schalter B (33) zur Betätigung des oberen Schlosses dient, und der Schalter A (32) zur Betätigung des unteren Schlosses (19) dient.

2. Anordnung nach Anspruch 1, **dadurch gekennzeichnet, dass** der untere Teil des Logos (31) im eingebauten Zustand als Offnungshandgriff dient.

## Claims

1. Arrangement of activating elements for a divided hinged vehicle tailgate (3) which is formed by an upper part (1) and a lower part (2), wherein the hinged vehicle tailgate (3) is provided with an upper lock, which serves for connecting the upper part (1) to the lower part (2) and/or for connecting the upper part (1) to the bodywork (21), and with a lower lock (19), which serves for connecting the hinged vehicle tailgate (3) and/or the lower part (2) to the bodywork (21), **characterized in that** the arrangement comprises a logo (31), which can be fitted pivotably on the lower part (2), and two switches A (32) and B (33), which can be fitted on the lower part (2), the switch B (33) serving for activating the upper lock, and the switch A (32) serving for activating the lower lock (19).

2. Arrangement according to Claim 1, **characterized in that** the lower part of the logo (31) when fitted serves as an opening handle.

## Revendications

1. Agencement d'éléments d'actionnement pour un hayon arrière de véhicule (3) rabattable divisé, qui est formé par une partie supérieure (1) et une partie inférieure (2), le hayon arrière de véhicule (3) rabattable étant muni d'une serrure supérieure qui sert à la liaison de la partie supérieure (1) avec la partie inférieure (2) et/ou de la partie supérieure (1) avec la carrosserie (21), et d'une serrure inférieure (19) qui sert à la liaison du hayon arrière de véhicule (3) rabattable et/ou de la partie inférieure (2) avec la carrosserie (21),
**caractérisé en ce que**
l'agencement comporte un logo (31) qui peut être monté pivotant sur la partie inférieure (2) ainsi que deux commutateurs A (32) et B (33) qui peuvent être montés sur la partie inférieure (2),
le commutateur B (33) servant à l'actionnement de la serrure supérieure, et le commutateur A (32) servant à l'actionnement de la serrure inférieure (19).

2. Agencement selon la revendication 1, **caractérisé en ce que** la partie inférieure du logo (31) sert de poignée d'ouverture dans l'état monté.
